Europäisches Patentamt

European Patent Office

Office européen des brevets

(19)

(11) **EP 1 134 996 A1**

(12) # EUROPEAN PATENT APPLICATION

(43) Date of publication:
**19.09.2001 Bulletin 2001/38**

(51) Int Cl.⁷: **H04Q 7/38**

(21) Application number: **00400757.1**

(22) Date of filing: **17.03.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **MOTOROLA, INC.
Schaumburg, IL 60196 (US)**

(72) Inventor: **Abdesselem, Ouelid
Toulouse 31000 (FR)**

(74) Representative: **Kopacz, William James
83, Avenue Foch
75116 Paris (FR)**

(54) **Method for synchronisation in a radio communication system**

(57)     The invention provides a communications system having a novel multi-frame signal format. Frequency correction information is transmitted in a time slot of a frame immediately preceding a timeslot in which synchronisation information is transmitted. The invention allows faster synchronisation to a cell in the communication system.

Figure 2

| | TS0 | TS1 | TS2 | TS3 | TS4 | TS5 | TS6 | TS7 |
|---|---|---|---|---|---|---|---|---|
| FN0 | | | | | | | | |
| FN5 | | | | | | | | |
| FN20 | | | | | | | | |
| FN25 | A-X | A – CSCH | B-X | B - CSCH | C-X | C – CSCH | D-X | D– CSCH |
| FN30 | | | | | | | | |
| FN45 | | | | | | | | |
| FN50 | | | | | | | | |
| | A-X | A – CSCH | B-X | B - CSCH | C-X | C – CSCH | D-X | D – CSCH |

where X = Short CFCCH

EP 1 134 996 A1

**Description**

The present invention relates to a radio communication system and to the subscriber units and base stations used in the radio communication system. In particular, the invention relates to an advantageous signal format for use in the radio communication system, which results in faster synchronisation of subscriber stations to base stations.

BACKGROUND TO THE INVENTION

One example of an existing radio communication system is the Global System for Mobile communication (GSM) system. The GSM system is generally considered to be the de facto world-standard in time division multiplexed cellular systems.

However, with increasing demand for cellular services, communication system designers are now modifying base technologies, such as the GSM system, to improve efficiency. Higher throughput will be obtained with the development of the EDGE Compact system, otherwise known as EGPRS Compact.

The EDGE Compact system is a cellular radio communication system in which a network of base stations is provided. Each base station provides access to the EDGE Compact network for a number of subscriber stations within a cell associated with that base station, by means of a radio frequency interface.

A 'subscriber station' in the EDGE Compact system may take a variety of forms. Essentially, the subscriber station can be defined as equipment having the ability to receive an EDGE Compact signal from a base station. Such equipment is usually referred to technically as a 'Mobile Station' or 'MS'. Typically this might be a mobile telephone. However, it might be a mobile radio which is also able to receive an EDGE Compact signal. A GPRS radio can also receive such signals. Clearly such a piece of equipment can normally also transmit to a base station, and may be able to transmit in 'direct mode' to other pieces of equipment. It is not essential that such a piece of equipment be mobile. In the following, the term "subscriber station" is used for all types of device such as these.

Signals on the radio frequency channels of the radio frequency interface for the EDGE Compact system are arranged as multi-frame signals comprising 52 frames (FN0..FN51), each of the frames containing within it eight timeslots (TS-0..TS-7). A base station and a subscriber station communicate by means of logical control channels and traffic channels which are mapped onto specified parts of the transmitted multi-frame signals.

The logic control channels include a Frequency Correction Channel (CFCCH), within which a frequency correction burst is transmitted, and a Synchronisation Channel (CSCH), within which a synchronisation burst is transmitted. In the current proposal for the EDGE Compact system, the Frequency Correction Channel (CFCCH) is transmitted in frame FN25 and the Synchronisation Channel (CSCH) is transmitted in frame FN51 of the EDGE Compact system multi-frame.

In the proposed EDGE Compact system a subscriber station must first synchronise on a cell before the subscriber station can communicate with the base station. In order to synchronise on a cell the subscriber station may monitor a selected radio frequency channel until a frequency correction burst, transmitted on the Frequency Correction Channel (CFCCH), is detected. Once the Frequency Correction Channel (CFCCH) has been detected, the Synchronisation Channel (CSCH) can easily be detected after a further 26 frames (FN51-FN25), to obtain the synchronisation information necessary to synchronise on the cell. Alternatively, the subscriber station may perform a direct CSCH search to synchronise on the cell, such that the synchronisation channel (CSCH) is detected without first having detected the Frequency Correction Channel (CFCCH).

However, as the Frequency Correction Channel (CFCCH) is transmitted only once in each multi-frame, the subscriber station must monitor the selected radio frequency for the duration of a multi-frame in order to be certain of receiving the Frequency Correction Channel (CFCCH). Therefore, it may be necessary to wait for a time period equivalent to 52 frames in order to detect the Frequency Correction Channel (CFCCH) and for a time period equivalent to a further 26 frames to locate the Synchronisation Channel (CSCH), ie a total time of 76 frame periods.

The multi-frame signal format used in the existing GSM system includes the corresponding Frequency Correction Channel (FCCH) and Synchronisation Channel (SCH) in successive frames of the multi-frame every 8 or 9 frames. Thus in the existing GSM system, a maximum duration of 12 frames is required in order to achieve synchronisation.

From the above discussion it is clear that a EDGE Compact subscriber station may take up to 6.5 times longer to synchronise with the proposed EDGE Compact system than existing GSM subscriber stations take to synchronise with the existing GSM system.

It is clear from the above that a subscriber station which is employing a direct CSCH search must wait for a time period of up to 52 frames in order to synchronise on a cell using the existing EDGE Compact system multi-frame structure. In contrast, a subscriber station which is employing a direct SCH search in the GSM system is able to synchronise to a cell within a maximum duration of 9 frames.

One of the key measures of quality of a communications system from the point of view of the user is the time necessary for the subscriber station to synchronise onto a cell and thus obtain access to the communication system.

The present invention seeks to provide a novel format signal for use in a communications system.

## SUMMARY OF THE INVENTION

According to the present invention there is provided a communication system using multi-frame signals, each frame of the multi-frame signal being divided into a plurality of timeslots, wherein in at least one frame of the multi-frame signal first control channel information is transmitted in a first timeslot immediately preceding a second timeslot in which second control channel information is transmitted.

Synchronisation channel information may be transmitted in two or more frames in the multi-frame signal. Preferably frequency correction information is transmitted in a timeslot immediately preceding each timeslot containing synchronisation channel information.

Most advantageously, in two frames in the multi-frame signal the frequency correction channel information is transmitted in a first timeslot immediately preceding a second timeslot in which synchronisation channel information is transmitted.

The synchronisation channel information advantageously contains information indicating the frame of the multi-frame in which the second timeslot is contained.

A single burst, containing frequency correction information and synchronisation information may be transmitted. Alternatively separate bursts containing frequency correction information and synchronisation information may be transmitted in consecutive time slots.

The length of a frequency correction burst transmitted on the frequency correction channel may be variable and advantageously depends on the size of cell in a cellular communication system utilising the invention.

A subscriber station advantageously uses frequency correction channel information to set its automatic frequency correction algorithm before each decoding of synchronisation channel information, this correction being a software correction applied on memorised samples of the synchronisation channel.

## BRIEF DESCRIPTION OF THE DRAWINGS

For a better understanding of the present invention, and to show how it may be brought into effect, reference will now be made, by way of example, to the accompanying drawings, in which:

Figure 1 is a partial schematic diagram of the multi-frame format currently defined for EDGE Compact system signals;
Figure 2 is a partial schematic diagram of a multi-frame format in accordance with an embodiment of the present invention;
Figure 3a illustrates a first exemplary arrangement of the frame format used the multi-frame format signal for the communication system in accordance with the present invention;
Figure 3b illustrates a second exemplary arrangement of the frame format used the multi-frame format signal for the communication system in accordance with the present invention;
Figure 4a is a first alternative arrangement of Figure 3b; and
Figure 4b is a second alternative arrangement of Figure 3b.

## DESCRIPTION OF AN EMBODIMENT OF THE INVENTION

The proposed EDGE Compact system will now be described in more detail in order to assist in the understanding of the present invention.

In the EDGE Compact system, control channels and traffic channels used during communications between a base station and subscriber stations within its corresponding cell are mapped onto radio frequency channels which are shared with adjacent cells.

More especially, the EDGE Compact system is presently configured such that a cluster of nine or twelve cells share three radio frequency channels for transmission of control channel information between the cell base stations and respective subscriber stations. In order to avoid collision between signals relating to different cells which are transmitted on the same radio frequency channel, the signals broadcast by the base stations of the cell cluster are synchronised so that each cell is allocated a time group within a frame for transmissions relating to that cell.

These time groups effectively provide a temporal offset for control channel transmissions of different cells in a cell group which share a common radio frequency channel for the transmission of control channels. In any one timeslot, only one cell actually transmits control channel information on a radio frequency channel that is in fact shared with other cells in the cell group. In other time slots, the other cells transmit control channel information on the same radio frequency channel. Each timeslot therefore contains control channel information destined for subscriber stations located in only one cell of the cell group which share the same common radio frequency channel for the transmission of control channels.

Thus, in the EDGE Compact system, subscriber stations are able to differentiate between cells by receiving 'time groups' of slots carrying control channel information. Since the control channel is supported by a dedicated time-slot within a time division frame, a common control channel radio frequency carrier serving four cells has equally partitioned and sequenced transmission periods, i.e. time-slots TS-1, TS-3, TS-5 and TS-7 are utilised within a four cell pattern of a cluster.

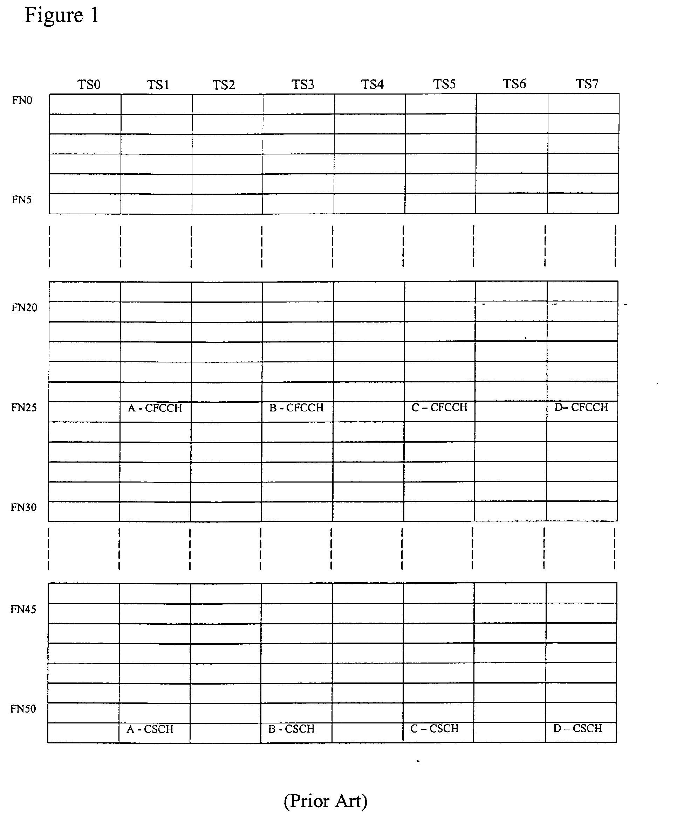

In order to illustrate this feature of the EDGE Compact system more clearly, a schematic diagram of the multi-frame format currently defined for EDGE Compact system signals is shown in Figure 1.

As shown in Figure 1, a multi-frame format signal comprising 52 Time Division Multiple Access frames (FN0..FN51) is used in the EDGE Compact system, each frame of the multi-frame format signal being divided into eight timeslots (TS-0..TS-7). Information not relevant to the invention has been omitted.

As mentioned above, the Frequency Correction Channel (CFCCH) is allocated to frame FN25 and the Synchronisation Channel (CSCH) is allocated to frame FN51 of the currently defined EDGE Compact system multi-frame format signal. Timeslots TS-1, TS-3, TS-5 and TS-7 of the respective frames are used for the control signals of the respective four cells using the same radio frequency carrier. The timeslots corresponding to the four cells are denoted by the letters "A", "B", "C", "D" in Figure 1.

It will be evident from this explanation that signals from base stations for neighbouring cells in the cell group are transmitted only in alternate time-slots, i.e. in the odd-numbered timeslots, but not in the even-numbered timeslots as shown in Figure 1. This arrangement prevents signals transmitted by one base station in the cell group from interfering with signals transmitted by another base station of the cell group owing to the time delay associated with the distance between the base stations.

Thus each multi-frame signal actually transmitted would contain information in only one of the timeslots. For example, for a multi-frame signal transmitted by the base station of cell B, the frequency correction burst is transmitted on timeslot TS-3 of frame FN25 and the synchronisation burst is transmitted on timeslot TS-3 of frame FN51, with no information being transmitted in all other timeslots of frames FN25 and FN51.

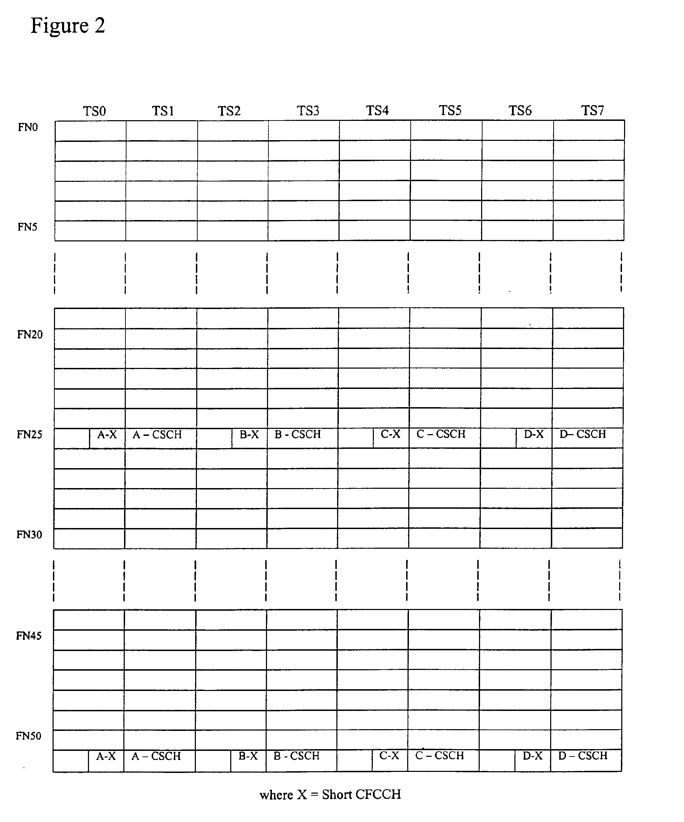

A preferred embodiment of the invention will now be described with reference to Figures 2-4b of the accompanying drawings.

Figure 2 is a schematic diagram of a multi-frame format signal for a communication system in accordance with an embodiment of the invention. Again, information not relevant to the invention has been omitted.

The multi-frame format signal shown in Figure 2 comprises 52 Time Division Multiple Access frames (FN0 .. FN51), each frame being divided into 8 timeslots (TS-0 .. TS-7). In each of the 26th and 52nd frame (FN25 and FN51) of the multi-frame format signal, a Synchronisation Channel (CSCH) for one of the cells in the cell group is mapped to an odd-numbered timeslot. A respective corresponding Frequency Correction Channel A-CFCCH, B-CFCCH, C-CFCCH and D-CFCCH is mapped to the immediately preceding even-numbered timeslot.

As explained above, each of the Synchronisation Channels A-CSCH, B-CSCH, C-CSCH and D-CSCH shown in Figure 2 in fact relates to a separate cell, and each multi-frame signal actually transmitted would contain a synchronisation burst ("CSCH burst") in only one of the Synchronisation Channels and a corresponding frequency correction burst ("short CFCCH burst") in the respective corresponding Frequency Correction Channels A-CFCCH, B-CFCCH, C-CFCCH and D-CFCCH.

The length of the short CFCCH burst is limited by a lower bound linked to the performance of the subscriber stations, and an upper bound depending on non-overlap conditions with the preceding burst of an adjacent cell.

The lower bound can be determined based on the non-detection probability, the false alarm probability, and the frequency correction capacity of the mobile stations. It is expected that the short CFCCH burst must contain at least 40 symbols in order to ensure that the subscriber stations will be able to detect it. However, this lower limit will depend on the detection-algorithms implemented in the subscriber stations.

The upper bound is determined by a non-overlap condition as follows:

$$d > c.(N-L).t_s$$

and so

$$L < N-d/(t_s.c)$$

where L is the overall length of the short CFCCH burst;

N is the number of symbols between the end of the immediately preceding burst and the end of the short CFCCH burst;

$t_s$ is the symbol duration;

d is the distance to an adjacent base station; and

c is the speed of light.

Since the position of the burst in the immediately preceding timeslot burst is generally unknown, it is helpful to use as the value N the number of symbols between the beginning of the timeslot and the end of the short CFCCH burst.

The length L may be fixed or adaptive, in which case it can be adjusted by the operator depending on the size of the cells.

The following description relates to an exemplary signal in the multi-frame signal format in accordance with this embodiment of the invention transmitted by cell "D" of the cell group. Since this description relates to an exemplary signal used by cell "D" of the cell group, the short CFCCH burst is transmitted in the 7th timeslot (TS-6) and the CSCH burst is transmitted in the 8th timeslot (TS-7).

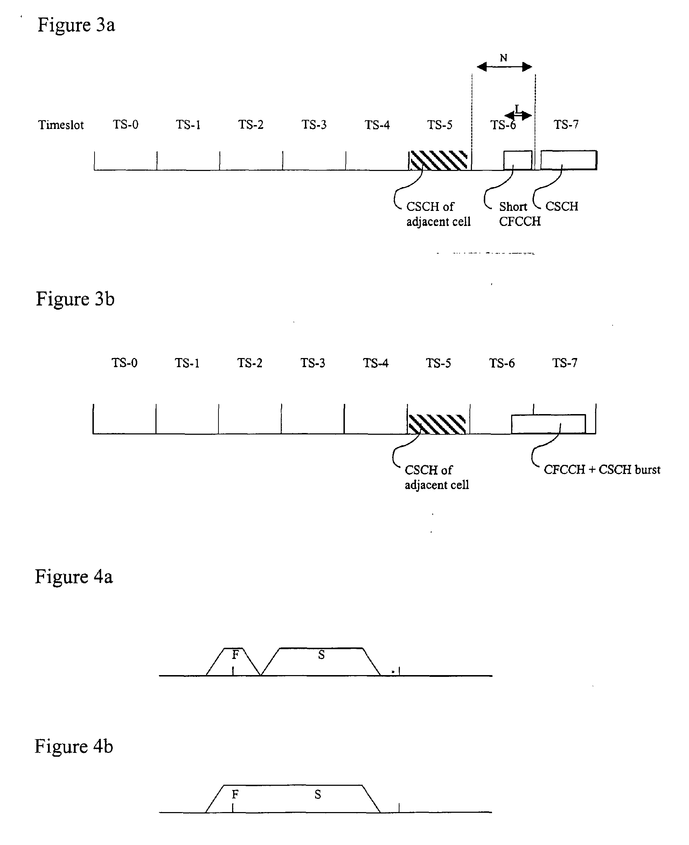

The position of the short CFCCH burst may be varied, in accordance with the invention, as shown in Figures 3a and 3b, which illustrate the frame format used in the 26th and 52nd frames (FN25 and FN51) of the multi-frame format signal for the communication system in accordance with an embodiment of the present invention.

Figure 3a shows a first arrangement in accordance with the invention in which a short CFCCH burst is positioned at the end of the timeslot preceding the CSCH burst. Advantageously, in order to avoid interference by the CSCH burst sent in timeslot TS-5 by cell C of the cell group, the short CFCCH burst adjoins the end of the TS-6/TS-7 timeslot boundary.

In general, the position of the previous CSCH burst in timeslot TS-5 is unknown, and so the parameter N can be taken to be the timeslot duration (=156.25 symbols). Assuming that d=52km (1.5 maximal cell radius using 1/3 re-use pattern) the corresponding upper bound for the short CFCCH burst length using the above equation is L=109 symbols. The short CFCCH burst contains 3 ramp-up bits and the 3 ramp-down bits, as will be familiar to a skilled person, and so the useful length of the short CFCCH burst in accordance with this embodiment of the invention is 103 bits.

It will be clear to a skilled person that the positioning of the short CFCCH burst at the end of the timeslot, as shown, is exemplary, and that the short CFCCH burst could be placed anywhere within the timeslot. However, clearly the positioning of the short CFCCH burst at the end of the time slot will maximize the value of the parameter N, which in turn will result in the maximum number of available symbols for the short CFCCH burst.

Figure 3b shows a second arrangement in accordance with the invention, in which a short CFCCH burst is positioned adjacent the CSCH burst, authorising a longer burst which overlaps the timeslot structure. This longer burst can be achieved in two ways, as illustrated in Figures 4a and 4b.

The first alternative as illustrated by Figure 4a, is to keep the short CFCCH burst and the CSCH burst as independent bursts and to apply to them such an emission delay that the two bursts are adjacent. If it is assumed that all the CSCH bursts are emitted at the same position in the respective timeslots, N is equal to one timeslot duration plus the 8.25 bits guard period (difference between a timeslot and a burst duration). With the same value of d as above, L=117 symbols, giving 111 useful symbols for the short CFCCH burst when the 3 ramp-up bits and the 3 ramp-down bits for the short CFCCH burst are taken into account.

The second alternative is to merge the short CFCCH burst and the CSCH burst into a single burst, as shown in Figure 4b, thus eliminating the 3 ramp down bits for the short CFCCH burst and the 3 ramp up bits for the CSCH burst. As a result, with the same value for d as indicated above, L=120 symbols ie 117 useful symbols for the short CFCCH burst.

Clearly, it is highly advantageous that the subscriber station detects both the short CFCCH burst and the adjacent CSCH burst, so as to achieve synchronisation to the cell in the shortest possible time. In order to achieve this, the subscriber station may store sufficient samples such that if a short CFCCH burst is detected the samples corresponding to the CSCH burst will have been stored in a buffer in the subscriber station.

Since frame FN25 is identical to frame FN51 in the described multi-frame signal, it is necessary to add further information to the synchronisation channel CSCH to indicate whether the frame containing the CSCH burst is in frame FN25 or FN51. In the context of the currently proposed EDGE Compact system (CR A085 on GSM TS 05.02), the CSCH burst contains one spare bit. This spare bit can be used to convey this information, for example by setting the bit to 1 in the CSCH burst in frame FN25 and by setting the bit to 0 in the CSCH burst in frame FN51

Thus, in the present application a multi-frame signal format is described which is advantageous with regard to the current proposal for the EDGE Compact system. In particular, the time necessary for a subscriber station to synchronise to a cell is reduced. Thus the maximum time taken for a subscriber station to synchronise to a cell using the described multi-frame format is 26 frames if the subscriber station decodes both the first short CFCCH burst and the adjacent CSCH burst without error; or 52 frames if the subscriber station fails to decode the CSCH burst immediately following the first detected short CFCCH burst.

Alternatively, the time needed for a subscriber station using direct synchronisation on the CSCH burst to synchronise to a cell is 26 frames.

Although the invention has been described in relation to the proposed EDGE Compact system, it will be clear to a skilled person that the principles of the invention may be applied to other communication systems and that the invention is not restricted to the EDGE Compact system.

**Claims**

1. A communication system using multi-frame signals, each frame of the multi-frame signal being divided into a plurality of timeslots, wherein in at least one frame of the multi-frame signal first control channel information is transmitted in a first timeslot immediately preceding a second timeslot in which second control channel information is transmitted.

2. The communication system as claimed in claim 1, wherein bursts containing control channel information overlap the timeslot boundary between first and second timeslots.

3. The communication system as claimed in claim 1 or 2, wherein adjacent bursts containing first and second control channel information have a combined length greater than a normal burst length.

4. The communication system as claimed in any preceding claim, wherein a single burst containing first control channel information and second control channel information is transmitted.

5. The communication system as claimed in any preceding claim, wherein the control channel information contains information indicating the frame of the multi-frame containing the control channel information.

6. The communication system as claimed in any preceding claim, wherein the length of a burst or the part of a burst which contains first control channel information is less than the length of a normal burst.

7. The communication system as claimed in any preceding claim, wherein the length of a burst or the part of a burst containing first control channel information is variable.

8. The communication system as claimed in any preceding claim, wherein the length of a burst or part of a burst containing first control channel information depends on the size of cells in the communication system.

9. The communication system as claimed in any preceding claim, where the length L of a burst or the part of a burst containing first control channel information is given by:

$$L < N\text{-}d/(t_s.c)$$

where N is the number of symbols between the beginning of the first timeslot and the end of the burst;

$t_s$ is the symbol duration;
d is the distance to an adjacent base station; and
c is the speed of light.

10. The communication system as claimed in any preceding claim, wherein the first control channel information is frequency correction information and the second control channel information is synchronisation information

11. A base station adapted for use in the communication system as claimed in any preceding claim.

12. A subscriber station adapted for use in the communication system as claimed in any preceding claim.

13. The subscriber station as claimed in claim 12, wherein the subscriber station uses frequency correction channel information to set an automatic frequency correction algorithm before decoding of synchronisation channel information, this correction being a software correction applied on memorised samples of the synchronisation channel.

Figure 1

| | TS0 | TS1 | TS2 | TS3 | TS4 | TS5 | TS6 | TS7 |
|------|------|------|------|------|------|------|------|------|
| FN0 | | | | | | | | |
| | | | | | | | | |
| | | | | | | | | |
| | | | | | | | | |
| | | | | | | | | |
| FN5 | | | | | | | | |

| | TS0 | TS1 | TS2 | TS3 | TS4 | TS5 | TS6 | TS7 |
|------|------|----------|------|----------|------|----------|------|----------|
| FN20 | | | | | | | | |
| | | | | | | | | |
| | | | | | | | | |
| | | | | | | | | |
| | | | | | | | | |
| FN25 | | A - CFCCH | | B - CFCCH | | C – CFCCH | | D– CFCCH |
| | | | | | | | | |
| | | | | | | | | |
| | | | | | | | | |
| | | | | | | | | |
| FN30 | | | | | | | | |

| | TS0 | TS1 | TS2 | TS3 | TS4 | TS5 | TS6 | TS7 |
|------|------|---------|------|---------|------|---------|------|---------|
| FN45 | | | | | | | | |
| | | | | | | | | |
| | | | | | | | | |
| | | | | | | | | |
| | | | | | | | | |
| FN50 | | | | | | | | |
| | | A - CSCH | | B - CSCH | | C - CSCH | | D – CSCH |

(Prior Art)

# Figure 2

| | TS0 | TS1 | TS2 | TS3 | TS4 | TS5 | TS6 | TS7 |
|---|---|---|---|---|---|---|---|---|
| FN0 | | | | | | | | |
| | | | | | | | | |
| | | | | | | | | |
| | | | | | | | | |
| | | | | | | | | |
| | | | | | | | | |
| FN5 | | | | | | | | |

| | TS0 | TS1 | TS2 | TS3 | TS4 | TS5 | TS6 | TS7 |
|---|---|---|---|---|---|---|---|---|
| FN20 | | | | | | | | |
| | | | | | | | | |
| | | | | | | | | |
| | | | | | | | | |
| | | | | | | | | |
| FN25 | A-X | A – CSCH | B-X | B - CSCH | C-X | C – CSCH | D-X | D– CSCH |
| | | | | | | | | |
| | | | | | | | | |
| | | | | | | | | |
| | | | | | | | | |
| FN30 | | | | | | | | |

| | TS0 | TS1 | TS2 | TS3 | TS4 | TS5 | TS6 | TS7 |
|---|---|---|---|---|---|---|---|---|
| FN45 | | | | | | | | |
| | | | | | | | | |
| | | | | | | | | |
| | | | | | | | | |
| | | | | | | | | |
| FN50 | | | | | | | | |
| | A-X | A – CSCH | B-X | B - CSCH | C-X | C – CSCH | D-X | D – CSCH |

where X = Short CFCCH

Figure 3a

CSCH of
adjacent cell

Short
CFCCH

CSCH

Figure 3b

CSCH of
adjacent cell

CFCCH + CSCH burst

Figure 4a

Figure 4b

**European Patent Office**

## EUROPEAN SEARCH REPORT

Application Number

EP 00 40 0757

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 506 863 A (MEIDAN REUVEN ET AL) 9 April 1996 (1996-04-09) * column 2, line 66 - column 4, line 16 * * column 4, line 52 - column 5, line 6 * * column 5, line 18 - line 63 * ----- | 1,3,5,6, 10-13 | H04Q7/38 |

TECHNICAL FIELDS SEARCHED (Int.Cl.7)

H04Q
H04B

The present search report has been drawn up for all claims

| Place of search | Date of completion of the search | Examiner |
|---|---|---|
| BERLIN | 25 August 2000 | Bocking, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 40 0757

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2000

| Patent document cited in search report | Publication date | Patent family member(s) | Publication date |
|---|---|---|---|
| US 5506863 A | 09-04-1996 | CN 1113669 A | 20-12-1995 |
| | | EP 0669068 A | 30-08-1995 |
| | | FI 951784 A | 13-04-1995 |
| | | GB 2286752 A,B | 23-08-1995 |
| | | IL 110277 A | 15-04-1997 |
| | | JP 8505029 T | 28-05-1996 |
| | | WO 9506377 A | 02-03-1995 |

EPO FORM P0459

For more details about this annex : see Official Journal of the European Patent Office, No. 12/82